# EUROPEAN PATENT APPLICATION

(11) **EP 3 037 307 A1**
(43) Date of publication of application: **29.06.2016**
(21) Application number: 13891645.7
(22) Date of filing: 19.08.2013
(51) Int. Cl.: B60S 1/44, B60S 1/38, B60S 1/26

(54) **TRANSVERSE WINDSHIELD WIPER**

(71) Applicant: Tan, Gangxing, Shenzhen, Guangdong 518112 (CN)
(72) Inventor: Tan, Gangxing, Shenzhen, Guangdong 518112 (CN)
(74) Representative: Stuttard, Garry Philip
(86) International application number: PCT/CN2013/081795
(87) International publication number: WO 2015/024165

(57) **Abstract**

The transverse windshield wiper comprises a wiper blade (1) which is vertically arranged on a surface of a windshield (0) and comes into contact with the windshield (0), a power device which drives the wiper blade (1) to transversely move back and forth along the surface of the windshield (0), an upper sliding rail (2) provided at an upper edge of the windshield (0), and a lower sliding rail (4) provided at a lower edge of the windshield (0), wherein an upper end of the wiper blade (1) is connected to an upper sliding block (3) provided on the upper sliding rail (2), a lower end of the wiper blade (1) is connected to a lower sliding block (5) provided on the lower sliding rail (4), and the upper sliding block (3) and the lower sliding block (5) are respectively connected to the power device.

## Description

### FIELD OF THE INVENTION

The invention relates to a device used for sweeping dirt, such as rainwater, snow, dust, etc. which obstruct the view on a windshield, and more particular to a transverse windshield wiper.

### BACKGROUND OF THE INVENTION

Windshield wiper, with a scientific name of WINDSHIELD WIPER, refers to a chip-type structure mounted at the front of a windshield, and its main function is to sweep dirt, such as rainwater, snow, dust, etc. which obstruct the view on the windshield. As the existing windshield wiper mostly sweeps dirt, such as rainwater, snow, dust, etc. on the surface of the windshield in a move of sector-like motion. It has the disadvantages of limited scrapping and sweeping scope, leaving dead angle that fails to be scrapped and the occurrence of situation where the rainwater follows the wiper. The Chinese patent application CN102632868A hereby discloses a transverse windshield wiper for a vehicle: "including a wiper blade and a driving gear, wherein further including an upper sliding rail, a lower sliding rail, an upper sliding block, a lower sliding block, a driving bead chain, a guiding tube and a fixed base, the upper sliding rail is mounted close to the upper edge of a windshield, the upper sliding rail is closely adhered to the windshield; the upper end of the wiper blade is movably connected with the upper sliding block, the upper sliding block is mounted on the upper sliding rail, the lower end of the wiper blade is movably connected with the lower sliding block, the lower sliding block is fixed on the driving bead chain, the driving bead chain is mounted in a circular rail formed by connecting the lower sliding rail with the guiding tube; an opening is located in the driving connection portion of the guiding tube of the circular rail and the gear and the driving bead chain; the circular rail is mounted on a fixed base, the fixed base is mounted at the lower edge of the windshield, the fixed base is provided with a dust-proof cover, and the dust-proof cover covers the circular rail." Although the windshield wiper transversely moving on the surface of the windshield solves the above disadvantages of the existing windshield wiper moving in a sector-like mode, it still has the advantages as follows: the transverse windshield wiper is only connected with a power device on the lower end of the wiper blade, the moving belt on the lower end drives the upper end to move. In fact, due to the existence of the frictional resistance between the upper sliding block and the upper sliding rail plus the non-linear rail of the upper sliding rail, the arrangement will make the wiper blade failed to smoothly move on the surface of the windshield left and right due to the obstruction.

### SUMMARY OF THE INVENTION

Aiming at the above shortages of the existing windshield wiper, the object of the invention is to provide a transverse windshield wiper that can smoothly scrape off dirt, such as rainwater, snow, dust, etc. on the surface of the windshield in a manner of transverse motion, and leave no dead angle during scraping and sweeping, and effectively avoid the occurrence of the situation where the rainwater follows the wiper.

In order to achieve the above object, the invention provides a transverse windshield wiper, including a wiper blade which is vertically arranged on a surface of a windshield and comes into contact with the windshield, a power device which drives the wiper blade to transversely move back and forth along the surface of the windshield, an upper sliding rail provided at an upper edge of the windshield, and a lower sliding rail provided at a lower edge of the windshield, wherein an upper end of the wiper blade is connected to an upper sliding block provided on the upper sliding rail, a lower end of the wiper blade is connected to a lower sliding block provided on the lower sliding rail, and the upper sliding block and the lower sliding block are respectively connected to the power device.

Further, the power device is a motor, an output shaft of the motor is provided with two power wheels, which are respectively a first power wheel driving the lower sliding block to move and a second power wheel driving the upper sliding block to move, the first power wheel is fixedly connected to the lower sliding block through a first driving belt, and the second power wheel is fixedly connected to the upper sliding block through a second driving belt.

Further, these two power wheels are the power wheels with different diameters when the length of the upper edge of the windshield is inconsistent with the length of the lower edge of the windshield, wherein the power wheel with the larger diameter is fixedly connected to a sliding block provided at the longer end of the upper edge and the lower edge of the windshield, and the power wheel with the smaller diameter is fixedly connected with the shorter end of the upper edge and the lower edge of the windshield.

Further, the power device is two motors, which are respectively a first motor driving the lower sliding block to move and a second motor driving the upper sliding block to move, the first motor is fixedly connected to the lower sliding block through a first driving belt, and the second motor is fixedly connected to the upper sliding block through a second driving belt.

Further, the first driving belt and the second driving belt are provided with an elastic wheel used for adjusting the degree of tightness and a guide wheel used for guiding the direction.

Further, further including a control switch which controls the motor to reverse when detecting that the wiper blade moves to the left edge or the right edge of the windshield. Further, any one or both of the upper sliding block and the lower sliding block is/are movably connected to the wiper blade through an elastic part.

Further, the lower sliding block is provided with a connecting part that is opened with a through-to-bottom groove in the middle, the through-to-bottom is provided with a sliding rod capable of sliding along the through-to-bottom groove, the lower end of the sliding rod is fixedly connected to the lower end of the wiper blade, the upper end of the sliding rod is connected to one end of a spring, the other end of the spring is fixedly connected with the lower sliding block, and the extending direction of the through-to-groove and the spring is along the same straight line with the wiper blade.

Further, further including a dust-proof decorating cover covering the lower sliding rail.

Further, the wiper blade is provided with a reinforcing rib.

### Beneficial effects:

Compared to the prior art, the wiper blade of the windshield wiper provided by the invention is vertically arranged on the surface of the windshield, and both the upper end and the lower end of the wiper blade are provided with a power device respectively. Under the action of the power device, the wiper blade can transversely move back and forth on the surface of the windshield. In addition, the motion state does not stop due to the obstruction, the moving process is smooth, and no dead angle is left during scraping and sweeping, and the occurrence of the situation is effectively avoided where the rainwater follows the wiper.

### BRIEF DESCRIPTION OF THE DRAWINGS

Fig. 1 is a schematic diagram of a front structure of embodiment 1 of the invention;
Fig. 2 is a schematic diagram of a three-dimensional breakdown structure of Fig. 1;
Fig. 3 is a schematic diagram of a three-dimensional structure of an upper sliding block in embodiment 1;
Fig. 4 is a schematic diagram of a three-dimensional structure of a lower sliding block in embodiment 1; and
Fig. 5 is a schematic diagram of a three-dimensional breakdown structure of embodiment 2 of the invention.

In figures:
0. windshield, 1. wiper blade, 2. upper sliding rail, 3. upper sliding block, 31. upper sliding block body, 32. first idler wheel, 33. connecting part, 4. lower sliding rail, 41. dust-proof decorating cover, 5. lower sliding block, 51. lower sliding block body, 52. second idler wheel, 53. connecting portion, 531. through-to-bottom groove, 532. sliding rod, 54. spring, 6. motor, 61. first power wheel, 62. second power wheel, 63. first motor, 64. second motor, 7. first driving belt, 8. second driving belt, 9. elastic guide wheel, 10. control switch, 11. controller.

### DETAILED DESCRIPTION OF THE PREFERRED EMBODIMENTS

The invention will be further described in details hereinafter with reference to the drawings and the specific embodiments. The embodiments hereinafter account for the invention, but the invention is not limited to the embodiments as follows.

### Embodiment 1

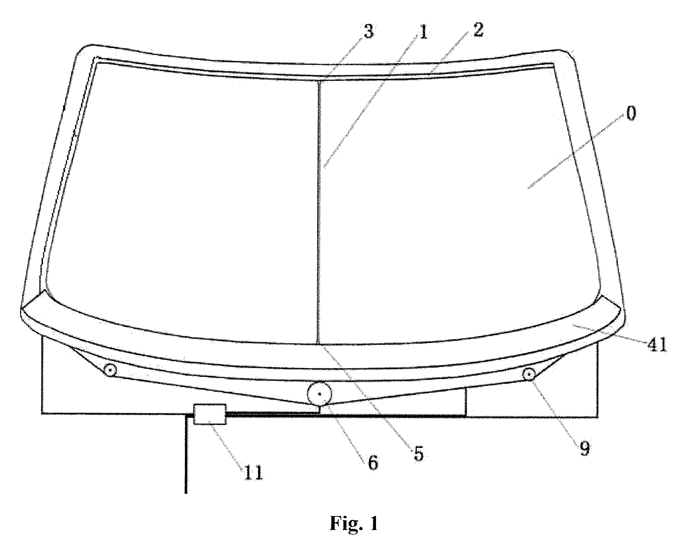

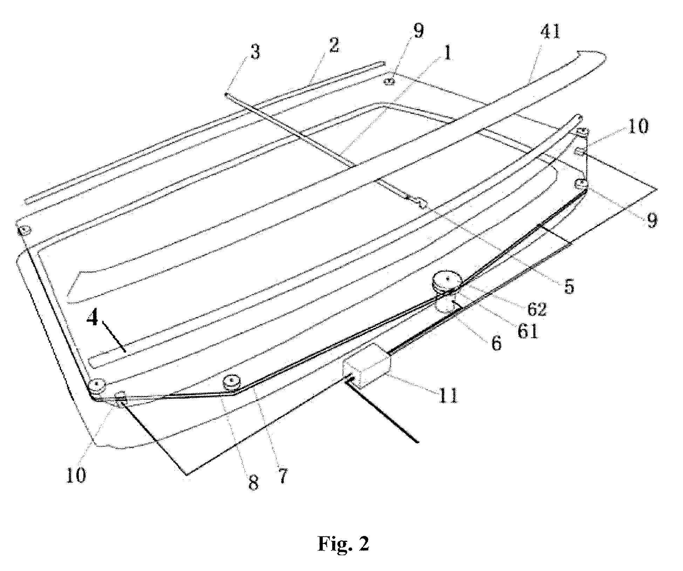

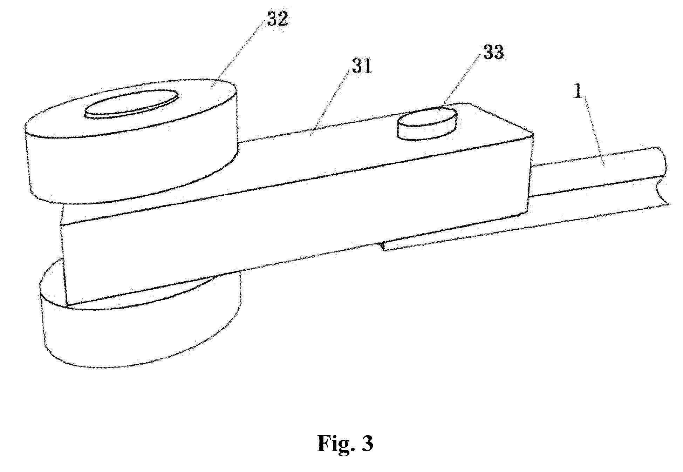

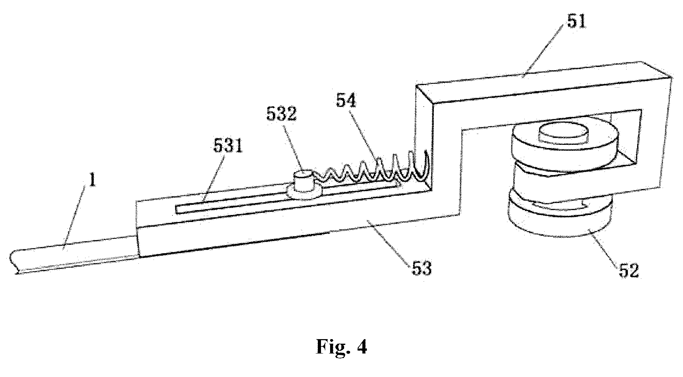

See Fig. 1 and Fig. 2, a transverse windshield wiper in the embodiment is mainly composed of a wiper blade 1, an upper sliding rail 2, an upper sliding block 3, a lower sliding block 4, a lower sliding block 5, a motor 6, an elastic guide wheel 9 and a control switch 10. The upper sliding rail 2 is provided at an upper edge of a windshield 0, and the upper sliding rail 2 in the embodiment is a groove-like sliding rail. The upper sliding block 3 is arranged on the upper sliding rail 2 and can freely slide along the transverse direction of the upper sliding rail 2, as shown in Fig. 3, the upper sliding block 3 in the embodiment includes an upper sliding block body 31, one end of the upper sliding block body 31 is connected with a first idler wheel 32, the other end is fixedly connected to one end of the wiper blade 1 through a connecting part 33, and the first idler wheel 32 is arranged in the groove of the upper sliding rail 2. The lower sliding rail 4 is provided at a lower edge of the windshield 0, and the lower sliding rail 4 in the embodiment is a groove-like sliding rail. The lower sliding block 5 is arranged on the lower sliding rail 4 and can freely slide along the transverse direction of the lower sliding rail 4, as shown in Fig. 4, the lower sliding block 5 includes a lower sliding block body 51 and a spring 54, one end of the spring 54 is fixedly connected to the lower sliding block body 51, one end of the lower sliding block body 51 is connected with a second idler wheel 52, the second idler wheel 52 is arranged in the groove of the lower sliding rail 4, the other end of the lower sliding block body 51 is a connecting portion 53, the middle of the connecting portion is opened with a through-to-bottom groove 531, the through-to-bottom groove 531 is provided with a sliding rod 532 capable of sliding along the through-to-bottom groove 531, the lower end of the sliding rod 532 is fixedly connected to the lower end of the wiper blade 1, and the upper end of the sliding rod 52 is fixedly connected with the other end of the spring 54. The wiper blade 1 connected to the upper sliding block 3 and the lower sliding block 5 is vertically arranged on the surface of the windshield 0 and is closely adhered to the windshield 0, and the extending direction of the through-to-bottom groove 531 and the spring 54 are along the same straight line with the wiper blade 1. In the embodiment, the motor 6 is adopted to drive the wiper blade 1 to transversely move back and forth along the surface of the windshield, the output shaft of the motor 6 is provided with a first power wheel 61 and a second power wheel 62, the first power wheel 61 is fixedly connected to the lower sliding block 5 through a first driving belt 7, and the second power wheel 62 is fixedly connected to the upper sliding block 3 through a second driving belt 8. The first power wheel 61 and the second power wheel 62 need to use the power wheels with different diameters when the length of the upper edge of the windshield applied in the vehicle is inconsistent with the length of the lower edge of the windshield, wherein the power wheel with the larger diameter is fixedly connected to a sliding block provided at the longer end of the upper edge and the lower edge of the windshield, and the power wheel with the smaller diameter is fixedly connected with the shorter end of the upper edge and the lower edge of the windshield. If the windshield 0 is in a shape as shown in Fig. 1 that the upper edge is short and the lower edge is long, the power wheel with the large diameter is fixedly connected with the lower sliding block 5, the power wheel with the small diameter is fixedly connected with the upper sliding block 3, and the diameter difference of these two power wheels depends on the side difference of the upper edge and the lower edge of the windshield. Under the drive of the motor, the wiper blade can transversely scrape the windshield at any angle as required. The first driving belt 7 and the second driving belt 8 are further provided with an elastic guide wheel 9 used for guiding and adjusting the degree of tightness. The transverse windshield wiper in the embodiment is further provided with a control switch 10 that plays a role in detecting whether the wiper blade 1 moves to the left edge or the right edge of the windshield 0 and in controlling the reversal rotation of the motor 6 when detecting the wiper blade 1 moves to the left edge or the right edge of the windshield 0. The shape and the structure of the control switch 10 are not limited, for example can be such mechanical switches capable of achieving the above functions as a photo-induction switch, an electric induction switch, a touch control switch and the like, which can be arranged in any place where the wiper blade 1 moving to the upper edge or the right edge of the windshield 0 can be detected, it would be best to arrange in the sliding rail. The motor, the control switch and the electric components in the embodiment are electrically connected with the controller 11.

In order to improve the toughness of the wiper blade 1 and prolong the service life thereof, a reinforcing rib can be further additionally arranged on the wiper blade (without being shown in figure). The lower sliding rail 4 of the transverse windshield wiper in the embodiment is further provided with a dust-dust decorating cover 41 covering the lower sliding rail 4, which not only plays a role in preventing dust but also improves the attractiveness of the windshield wiper. In order to prevent dust preferably, a dust-proof photographic film capable of automatically resetting can further be arranged in the opening direction of the groove-like sliding rail in the embodiment. The dust-proof photographic film can be two adhesive tapes made of mutually-matched flexible materials and respectively arranged at both sides of the groove notch, and the opposite edges of the two adhesive tapes are overlapped together, and the portion of the sliding block connected with the wiper blade extends out from the middle of the two adhesive tapes.

Of course, the upper sliding block in the embodiment can also adopt the structure that is the same as or similar to the structure of the lower sliding block to movably connect the upper end of the wiper blade; in the same way, the lower sliding block in the embodiment can also adopt the structure that is the same as or similar to the structure of the upper sliding block to fixedly connect to the lower end of the wiper blade. In addition, the driving belts in the embodiment can be such driving parts playing a role in driving as a driving steel wire, a driving rope, a driving chain and the like. In order to better control the motion of the wiper blade, a power adjusting device for adjusting the output power can be additionally arranged for the motor, such as a reduction gear box and the like.

### Embodiment 2

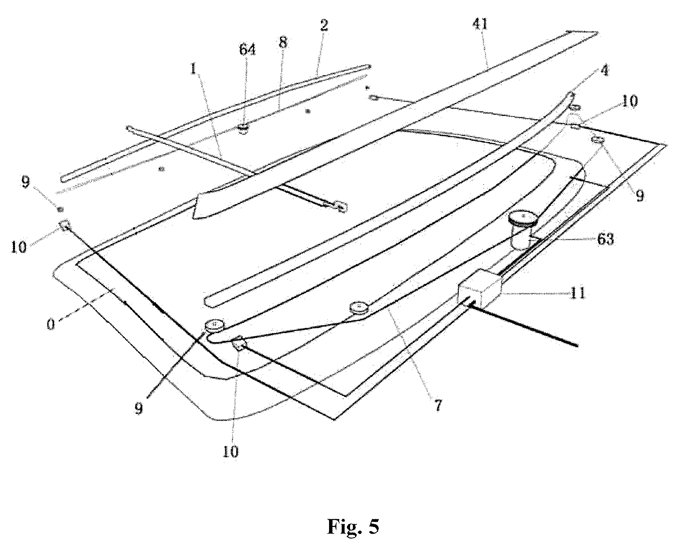

See Fig. 5, the difference from the embodiment 1 is that two motors adopted in the embodiment drive the wiper blade 1 to move back and forth, these two motors are a first motor 63 fixedly connected to the lower sliding block 5 through the first driving belt 7 and a second motor 64 fixedly connected to the upper sliding block 3 through the second driving belt 8, and a control switch detecting the motion position is respectively arranged for the upper sliding block 3 and the lower sliding block 5 at the same time. When the upper sliding block 3 moves to the left end or the right end of the upper sliding rail 2, the corresponding control switch in the motion position is detected to control the reverse rotation of the second motor 64. When the lower sliding block 5 moves to the left end or the right end of the lower sliding rail 4, the corresponding control switch in the motion position is detected to control the reverse rotation of the second motor 63.

## Claims

1. A transverse windshield wiper, comprising a wiper blade which is vertically arranged on a surface of a windshield and comes into contact with the windshield, a power device which drives the wiper blade to transversely move back and forth along the surface of the windshield, an upper sliding rail provided at an upper edge of the windshield, and a lower sliding rail provided at a lower edge of the windshield, wherein an upper end of the wiper blade is connected to an upper sliding block provided on the upper sliding rail, a lower end of the wiper blade is connected to a lower sliding block provided on the lower sliding rail, and the upper sliding block and the lower sliding block are respectively connected to the power device.

2. The transverse windshield wiper according to claim 1, wherein the power device is a motor, an output shaft of the motor is provided with two power wheels, which are respectively a first power wheel driving the lower sliding block to move and a second power wheel driving the upper sliding block to move, the first power wheel is fixedly connected to the lower sliding block through a first driving belt, and the second power wheel is fixedly connected to the upper sliding block through a second driving belt.

3. The transverse windshield wiper according to claim 2, wherein these two power wheels are the power wheels with different diameters when the length of the upper edge of the windshield is inconsistent with the length of the lower edge of the windshield, wherein the power wheel with the larger diameter is fixedly connected to a sliding block provided at the longer end of the upper edge and the lower edge of the windshield, and the power wheel with the smaller diameter is fixedly connected with the shorter end of the upper edge and the lower edge of the windshield.

4. The transverse windshield wiper according to claim 1, wherein the power device is two motors, which are respectively a first motor driving the lower sliding block to move and a second motor driving the upper sliding block to move, the first motor is fixedly connected to the lower sliding block through a first driving belt, and the second motor is fixedly connected to the upper sliding block through a second driving belt.

5. The transverse windshield wiper according to claim 2, 3 or 4, wherein the first driving belt and the second driving belt are provided with an elastic wheel used for adjusting the degree of tightness and a guide wheel used for guiding the direction.

6. The transverse windshield wiper according to claim 2, 3 or 4, further comprising a control switch, which controls the motor to reverse when detecting that the wiper blade moves to the left edge or the right edge of the windshield.

7. The transverse windshield wiper according to any one of claims 1 to 4, wherein any one or both of the upper sliding block and the lower sliding block is/are movably connected to the wiper blade through an elastic part.

8. The transverse windshield wiper according to any one of claims 1 to 4, wherein the lower sliding block is provided with a connecting part that is opened with a through-to-bottom groove in the middle, the through-to-bottom is provided with a sliding rod capable of sliding along the through-to-bottom groove, the lower end of the sliding rod is fixedly connected to the lower end of the wiper blade, the upper end of the sliding rod is connected to one end of a spring, the other end of the spring is fixedly connected with the lower sliding block, and the extending direction of the through-to-groove and the spring is along the same straight line with the wiper blade.

9. The transverse windshield wiper according to any one of claims 1 to 4, further comprising a dust-proof decorating cover covering the lower sliding rail.

10. The transverse windshield wiper according to any one of claims 1 to 4, wherein the wiper blade is provided with a reinforcing rib.
